(19) **Europäisches Patentamt**

**European Patent Office**

**Office européen des brevets**

(11) **EP 1 460 254 B1**

(12) **EUROPEAN PATENT SPECIFICATION**

(45) Date of publication and mention
of the grant of the patent:
**30.08.2006 Bulletin 2006/35**

(51) Int Cl.:
***F02D 41/00*** *(2006.01)*     ***F02D 41/22*** *(2006.01)*

(21) Application number: **03075837.9**

(22) Date of filing: **21.03.2003**

(54) **Method for diagnosing an induction system for an internal combustion engine**

Diagnoseverfahren für eine Sauganlage einer Brennkraftmaschine

Procédé pour diagnostiquer un système d'admission pour un moteur à combustion interne

(84) Designated Contracting States:
**DE GB SE**

(43) Date of publication of application:
**22.09.2004 Bulletin 2004/39**

(73) Proprietor: **Ford Global Technologies, LLC.**
**Dearborn MI 48126 (US)**

(72) Inventors:
• **Stotsky, Alexander**
 **422 52 Hisings Backa Sverige (SE)**
• **Eriksson, Sören**
 **442 90 Kungälv (SE)**

(74) Representative: **Romare, Laila Anette**
 **Albihns Göteborg AB**
 **Box 142**
 **401 22 Göteborg (SE)**

(56) References cited:
**EP-A- 0 399 829**     **JP-A- 10 103 097**
**US-A- 5 780 730**     **US-A1- 2002 035 986**
**US-A1- 2002 129 646**

**Description**

TECHNICAL FIELD

The invention relates to a method for detection of cam profile switching and variable intake system states in the induction system of an internal combustion engine.

BACKGROUND ART

Modern internal combustion engines may be provided with Cam Profile Switching (CPS) and Variable Intake System (VIS) technology, which have positive effects on drivability, exhaust gas emissions and fuel consumption. For such engines there exists a requirement to have an effective diagnostic method for detecting a system failure.

The valve lift events and the positions of the VIS flaps are conventionally not directly measured and special diagnostic algorithms, based on the indirect information about the valve lift and the VIS state, are therefore required to identify a failure in the system.

US 2002/0 035 986 discloses a method for determination of a failure of a cylinder disabling mechanism according to the preamble of claims 1 and 9.

Known methods allowing detection of the CPS state can be based on the difference in the air charge inducted in the cylinders for different valve lifts. The inducted air charge measured by a manifold air flow (MAF) sensor is compared with the air charge model based on the measured position of the throttle flap, intake manifold pressure and engine speed. The CPS state is associated with the difference between measured and modelled air charge. This solution is shown in US 6 213 068. A drawback of the method described in this patent is that the method does not allow for individual bank failure detection in the cases where the difference in the volumetric efficiency between low and high lifts is not large. Moreover, the low frequency pressure oscillations induced by the failure of one bank make the failure detection difficult.

A further method is based on the combustion state monitoring using fluctuations of the engine speed. The method is based on the fact that the combustion state may change considerably during cam profile shifting, as shown in US Patent 6 006 152. This invention uses the technique of monitoring the combustion state via irregularities of the engine speed. Irregularities in engine speed and torque are associated with the CPS state. The method allows for individual cylinder failure detection and uses a conventional torque estimation technique that is well known in the literature devoted to the combustion efficiency monitoring functions, see for example US 4 532 798 and the references cited therein. A drawback of the method proposed in US 6 006 152 is the fact that the detection is restricted to steady-state cases only.

A general drawback of the detection method based on non-uniform engine speed is the dependence of the combustion state of the engine on ignition and air/fuel (A/F) ratio. In other words any problems in the ignition or the fuel supply system will affect this diagnostic method. Another drawback of the method is its calibration complexity. For each working point an amplitude should preferably be calibrated for each individual cylinder for reliable results. Despite of the fact that the method allows individual cylinder failure detection to be used for the detection of the failure of a whole cylinder bank, which is the most exhaust emission sensitive case, the calibration of all the above parameters is still required.

Hence there exists a need for an improved method for diagnosing engine induction systems provided with cam profile switching arrangements and/or variable intake systems.

DISCLOSURE OF INVENTION

The above problems are solved by a method according to claim 1 and its dependent claims. The method can be used for the detection of both the CPS state and the VIS state via irregularities in the air intake manifold pressure. The method allows for both individual cylinder failure detection as well as the detection of the failure multiple cylinders requiring calibration of a single parameter only. Furthermore, since the method is based on the intake manifold pressure pulses originating from the intake event, the detection method is not affected by problems in the ignition and fuel systems.

According to a preferred embodiment, the invention relates to a method for diagnosing an induction system for an internal combustion engine, which engine is a multicylinder engine with one or more banks of cylinders. Said one or more banks have an air intake manifold, preferably, but not necessarily, provided with a variable intake system (VIS). A pressure sensor is positioned in the air intake manifold. The number of pressure pulses per unit time is equal or higher than the number of intake events for the engine cylinders. For instance, for a six cylinder engine the pressure sensor generates 6 pulses per cycle, which corresponds to the engine frequency. Additional pulses may be generated by a certain overlap of pressure pulses in the manifold.

Although the engine described in the examples only shows one intake valve per cylinder, the method may also be used for three or four valve cylinders with two intake valves per cylinder. Because the method uses maximum and

2

minimum amplitudes of the pressure pulses, as described in detail below, the number of valves will not affect the calculations.

In this context, a bank is defined as a group of physically adjacent cylinders, which preferably, but not necessarily, are supplied with air from a common air intake manifold. Such an intake manifold may be a central collector or a separate sub-collector. A CPS group is defined as a group of successive firing cylinders. Banks and CPS groups may coincide, but this is not a requirement for the method according to the invention.

The aim of the invention is to enable detection of a malfunction, such as incorrect valve lift caused by a defective CPS actuator, in a CPS failure group. A CPS failure group may include on or more cylinders in any one CPS group where a malfunction has occurred. Consequently, a CPS failure group may include:

- all cylinders, whereby all intake valves are affected. In this case the average amplitudes of the pressure pulses from all intake valves may be compared to an absolute reference level to determine if a malfunction has occurred;
- one or more CPS groups, whereby all intake valves in said one or more CPS groups are affected. In this case the maximum amplitudes of the pressure pulses from the intake valves of said one or more CPS groups may be compared to the minimum amplitudes of the remaining, operative CPS group or groups to determine if a malfunction has occurred. If the difference between the minimum amplitudes of one group and the maximum of the other is positive and exceeds a certain threshold value then the malfunction has occurred;
- one or more individual cylinders, whereby the intake valves for said one or more cylinders are affected. In this case the maximum amplitudes of the pressure pulses from the intake valves of said one or more cylinders may be compared to the minimum amplitudes of the remaining, operative intake valves to determine if a malfunction has occurred. If the difference between the minimum amplitudes of one group and the maximum of the other is positive and exceeds a certain threshold value then the malfunction has occurred.

The CPS system includes one or more controllable actuators for achieving a cam profile switch on demand from an electronic control unit. In-line engines with a single actuator for an entire camshaft is defined as having a single bank with a common, single CPS group. In this case the method allows detection of a failure in the single actuator.

In-line engines, W- or V-type engines and boxer engines may include two or more CPS groups. An in-line engine with separate actuators for each cam may have at least two CPS groups, which groups may or may not coincide with the positioning of a number of air intake manifold sub-collectors supplying a number of banks of cylinders. A V-type or boxer engine with separate camshafts for each bank of cylinders may have one CPS group per bank or multiple CPS groups for each bank. As stated above, the CPS groups may or may not coincide with the positioning of a number of air intake manifold sub-collectors supplying the banks of cylinders. In both the latter cases the method allows detection of a failure in each individual actuator, irrespective of the actuators being arranged for individual actuation of each CPS group or compulsory simultaneous actuation of all CPS groups.

In the above cases, a pressure sensor is preferably placed in a main, or central, collector for measuring pressure pulses occurring in the air intake manifold. However, it is also possible to provide each sub-collector with a pressure sensor and to use a multiplexer to allow subsequent processing of a composite pressure signal.

Calculation of average values for the amplitudes of the inlet pressure signal for each bank over a predetermined number of cycles can be performed by using the formula:

$$\overline{A_i} = \frac{\sum_{j=1}^{nc} A_{ij}}{n_c}$$

where;

$\overline{A_i}$     is the average amplitude of the intake manifold pressure fluctuations for the cylinder i over the number of cycles $n_c$, and

$n_c$     for $j = 1, .... n_c$ is the cycle number.

When calculating the value $A_{ij}$ that is a function of intake stroke power over the number of cycles, this is done by using the formula:

$$A_{ij} = \max p(t_f, t_s) - \min p(t_f, t_s)$$

where;

$A_{ij}$ is the pressure ($p(\cdot)$) fluctuation over the time interval [$t_s$ - $t_f$], for the cylinder $i$ in the cycle $j$;

$t_s$ is the start of the time interval, and

$t_f$ is the end time.

The first calculating step can be used for determining maximum and minimum values of the average amplitudes for each bank. By computing the difference between minimum values and maximum values of the amplitudes, a difference signal can be generated. A signal indicative of a malfunction in the induction system may be generated if the difference signal exceeds a predetermined limit. This limit can be determined by comparing the difference signal to a reference signal.

In the case of a an in-line engine with a single bank and one CPS group, the difference signal is computed by comparing an absolute value for all cylinders with a known reference value. If the difference signal exceeds a predetermined limit, a failure has occurred in the CPS system.

According to one embodiment the method is used to detect the CPS state in a cylinder or CPS group of cylinders. Each CPS group comprises a number of successive firing cylinders. In the example described below, a bank is defined as a group of adjacent cylinders. For a six cylinder engine each bank may comprise three adjacent cylinders, where each bank is provided with individual intake manifold sub-collectors. However, the invention can be applied to both in-line engines as well as V-type or boxer engines in general. For W-type, V-type or boxer engines, having 4, 6, 8 or more cylinders, the cylinder banks are more clearly defined.

According to a further embodiment the method is used to detect the VIS state. For an induction system provided with VIS, the air intake manifold comprises a first central collector and a number of secondary collectors.

Each secondary collector is associated with one bank of cylinders and is arranged between the central collector and the cylinder head of the engine. A variable valve tuning means can be in each air intake manifold or be arranged to connect adjacent secondary collectors in the air intake manifold. The sensor generating a pressure signal indicative of a malfunction of the system may preferably be placed in the central collector. However a pressure sensor can also be arranged in each collector, or in each individual air intake runner.

The invention further relates to a computer readable storage device according to claim 9. As stated above, the engine is a multicylinder engine having a piston disposed in each cylinder to define a combustion chamber, an air intake manifold, intake valves for admitting fresh air into the cylinder, a fuel injector for injecting fuel into the combustion chamber, and exhaust valves for discharging exhaust gas resulting from combustion within the cylinder. The air induction system is provided with a cam profile switching means for the intake valves.

The computer readable storage device comprises the instructions set out in claim 9.

The computer readable storage device may further comprise instructions for generating a signal indicative of a malfunction of a cam profile switching means controlling intake valve lift in the induction system.

The computer readable storage device may comprise instructions for generating a signal indicative of a malfunction of the cam profile switching means for a CPS failure group comprising one or more CPS groups of successively firing cylinders, which CPS group has a common cam profile switching actuator. The device can also be provided with instructions for generating a signal indicative of a malfunction of the cam profile switching means for a CPS failure group comprising individual cylinders, which cylinders have individual cam profile switching actuators.

The computer readable storage device may further comprise instructions for generating a signal indicative of a malfunction of a variable valve tuning means for each air intake manifold. Theses instructions may be provided separately or in combination with the instructions for detecting CPS failure groups.

BRIEF DESCRIPTION OF DRAWINGS

In the following text, the invention will be described in detail with reference to the attached drawings. These drawings are used for illustration only and do not in any way limit the scope of the invention. In the drawings:

Figure 1 shows a cross section through an engine provided with a cam profile switching arrangement according to the invention;

Figure 2 shows an air intake manifold for a straight 6-cylinder engine according to the invention;

Figure 3 shows a diagram with intake manifold pressure plotted over step number;

Figure 4 shows a diagram with average pressure amplitude over step number;

Figure 5 shows a diagram with average pressure amplitude and a difference signal over step number;

Figure 6 shows a diagram with intake manifold pressure pulses plotted over time.

MODES FOR CARRYING OUT THE INVENTION

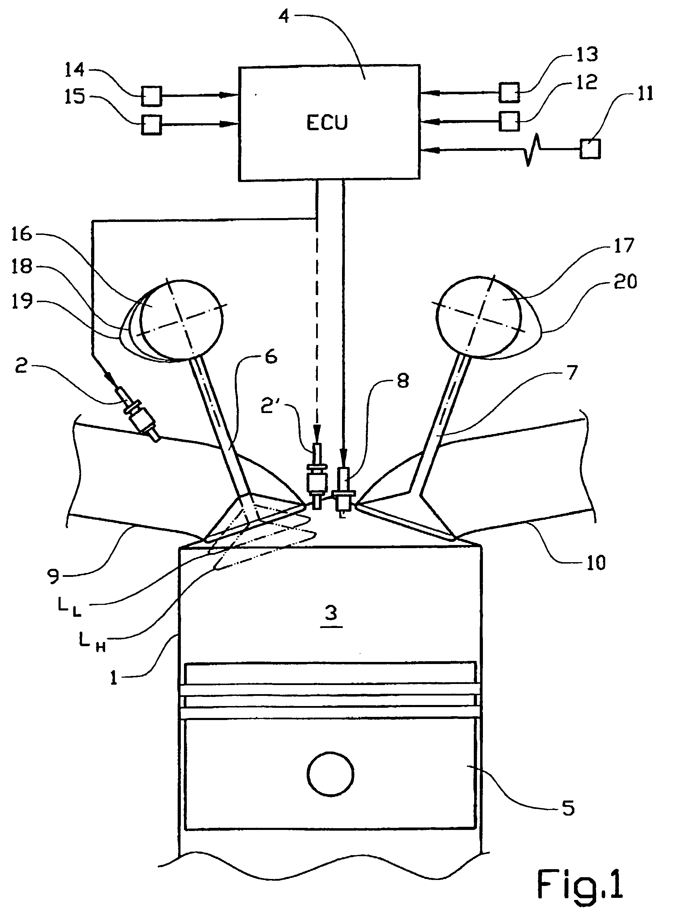

Figure 1 shows a schematic illustration of an internal combustion engine to be diagnosed using the method according to the invention. The engine is provided with at least one cylinder 1 and comprises a fuel injector, through which fuel is injected into a combustion chamber 3, for each cylinder 1. The fuel injector can be arranged either for port injection 2 or for direct injection 2'. An electronic control unit 4 controls fuel injection quantity per combustion cycle injected through each fuel injector. A piston 5 in the engine cylinder has a compression action that causes a mixture of air and fuel within the combustion chamber to be compressed, whereby the fuel/air mixture is ignited by a spark plug 8. The cylinder is provided with at least one inlet valve 6 for admitting gas which includes fresh air into said cylinder and at least one exhaust valve 7 for exhausting combusted gases from said cylinder. Air is supplied through an intake conduit 9 connected to an intake manifold, while exhaust gas is exhausted through an exhaust conduit 10.

The control unit 4 receives signals from at least one sensor for measuring engine operation parameters. In addition to an air intake manifold pressure sensor 11, a number of conventional sensors, such as a λ-sensor 12 in the exhaust conduit, a temperature sensor for intake air 13, an engine load sensor 14 and an engine speed sensor 15, may be connected to the unit 4.

The control unit controls the function of the intake and exhaust valves 6, 7 by means of actuators arranged to perform a cam profile switching. As can be seen from the figure, the cams 16, 17 on each camshaft are provided with lobes 18,19, 20 which causes the valves 6, 7 open. Closure of the valves is achieved by means of conventional springs (not shown). The cam 16 for the intake valve 6 is provided with two lobes 18, 19 of different heights to perform low or high lifts $L_L$, $L_H$. In this case, the default is a low lift $L_L$ caused by a smaller, first lobe 18. In this way, the flow of air and the volumetric efficiency of each cylinder can be controlled. The control unit 4 actuates a cam profile switching mechanism, for instance by causing an actuator to displace the camshaft axially, in order to bring a larger, second lobe 19 into operation. In the current example, a number of CPS mechanisms can be controlled individually or for separate banks of cylinders using solenoids. The actuators may be either electrically, hydraulically or mechanically operated.

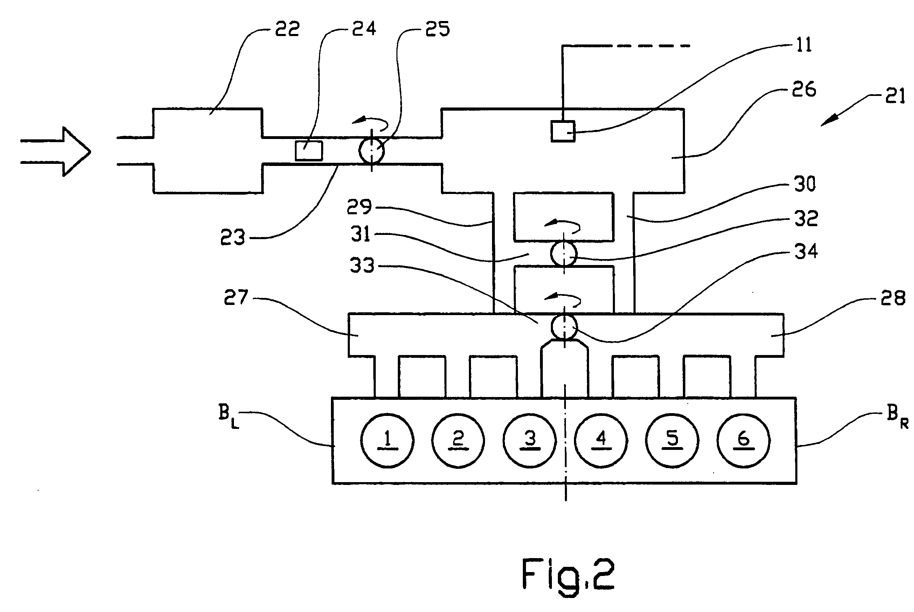

Figure 2 shows a schematic representation of an air induction system, excluding intake valves, for an in-line 6-cylinder engine. The induction system 21 comprises an air filter 22 from which air flows through a main conduit 23 provided with a manifold air flow (MAF) sensor 24 and a controllable throttle 25. The air subsequently flows into an air intake manifold comprising a central first collector 26 connected to a pair of first and second sub-collectors 27, 28. The central collector 26 is connected to each sub-collector via a first and a second conduit 29, 30. The first and the second conduits 29, 30 are interconnected by a third conduit 31 provided with a controllable first throttle 32. Similarly, the first and second sub-collectors 27, 28 are interconnected by a fourth conduit 33 provided with a controllable second throttle 34. The first sub-collector 27 is connected to a first, left bank $B_L$ of cylinders, i.e. cylinders 1, 2 and 3, via individual air intake runners. Similarly, the second sub-collector 28 is connected to a second, right bank $B_R$ of cylinders, i.e. cylinders 4, 5 and 6, via individual air intake runners. Underlined numbers indicate cylinder number. In this example, the firing order is 1, 5, 3, 6, 2, 4.

For the example in Figure 2, the CPS system includes two CPS groups with separate oil banks (not shown) for each CPS group. Solenoids control the oil banks, which in turn control the switching of the cams for each CPS group. In the current example, a first CPS group is made up of cylinders 1, 3 and 5, and a second CPS group is made up of cylinders 2, 4 and 6. However, the method can also be used for cases where the arrangement of the CPS groups coincide with the banks connected by the same sub-collectors.

The first and second throttles 32, 34 in both interconnecting third and fourth conduits 31, 33 are used for operating a variable intake system (VIS). These throttles are also termed Intake Manifold Tuning Valves (IMTV). The VIS operates by opening and closing either or both throttles 32, 34 in predetermined sequences determined by various engine load and speed conditions. In this way it is possible to use resonance pressure pulses causes by intake valve events to improve the degree of filling of the cylinders, and thereby improving the volumetric efficiency of the engine.

The central collector is provided with a pressure sensor 11 connected to a control unit 4 (see Fig. 1). The pressure sensor is arranged to detect if a malfunction has occurred in the CPS and/or the VIS.

The invention relates to a method for the CPS state detection which is based on the difference in the amplitude of the inlet pressure pulses for different CPS positions, such as low and high valve lifts. The difference in the amplitude of the inlet pressure pulses for low and high lifts comes from the pushback or overlap effects for low speeds and loads and also from the difference in the valve effective areas for high speeds.

The pressure pulses in the intake manifold originate from intake valve events, that is intake valve opening and intake valve closing, which pulses have a substantially regular waveform. Every fluctuation corresponds to one cylinder whose intake stroke occurs in the interval.

Ideally, in a steady state operation, the pressure pulsation picture is the same for all the cylinders since the pressure waveform is regular. However, under real engine operating conditions, even in a steady state, the wave amplitudes are not the exactly the same due to cycle to cycle variations. This in turn is overcome by an averaging of the amplitudes for every cylinder over a sufficiently large number of cycles. Hence the method can be used for both steady-state conditions and transients. In the case of transients, the method can be used provided that the low frequency trend of the intake pressure signal is properly compensated for (see the compensation technique disclosed in EP 1 457 644).

The method for CPS diagnosis can be described by the following steps:

Step 1. The average values of the amplitudes of the inlet pressure signal are computed over a relatively large, predetermined number of cycles $n_c$;

$$(1) \qquad \overline{A_i} \simeq \frac{\sum_{j=1}^{nc} A_{ij}}{n_c}$$

where;

$A_i$   is the average amplitude of the intake manifold pressure fluctuations for the cylinder i over the number of cycles $n_c$, and

$n_c$   for $j = 1, \ldots n_c$ is the cycle number, and further;

$$(2) \qquad A_{ij} = \max p(t_f, t_s) - \min p(t_f, t_s)$$

where;

$A_{ij}$   is the pressure (p(•)) fluctuation over the time interval $[t_s - t_f]$, for the cylinder $i$ in the cycle $j$.

$t_s$   is the start of the time interval, and

$t_f$   is the end time.

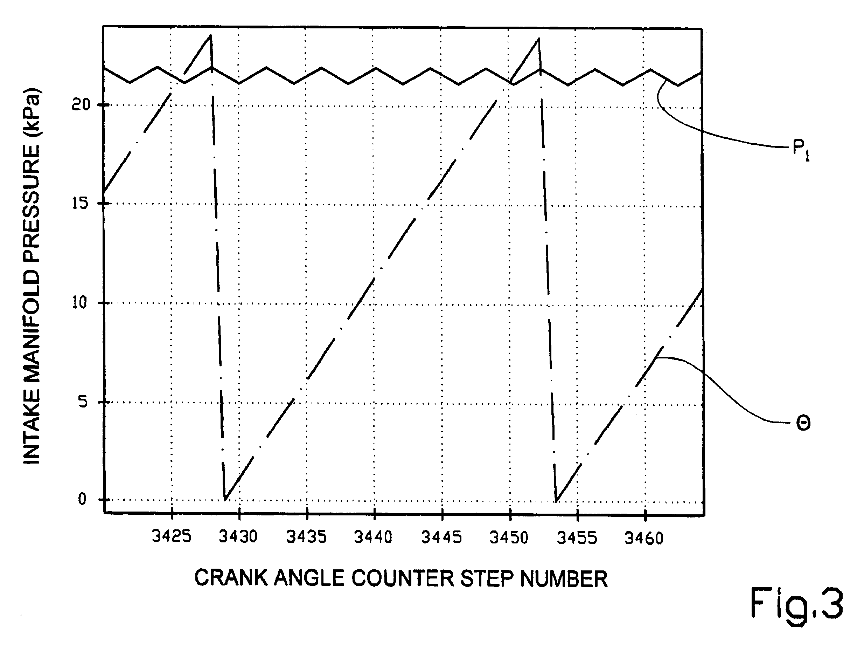

An intake manifold pressure signal for straight 6-cylinder engine is presented in Figure 3 with a (solid) line $P_1$ representing the pressure in kPa. A crank angle counter is shown as a function of step number, where each step corresponds to 30 crank angle (CA) degrees, and is plotted with a (dash dotted) line θ. Here the peak-to-peak angle is 720°, representing one engine cycle. In Figure 3 the six intake pressure pulses per engine cycle are clearly distinguishable. As can be seen from Figure 2, the intake manifold is provided with a central, main collector and two separate sub-collectors, with a single pressure sensor in the main collector.

The set-up would be the same in case of a V6 engine, with the difference that the method would be used for monitoring one camshaft for each bank. When the CPS system is actuated the cam profile is adjusted simultaneously or individually for each CPS cylinder group. In principle, the manifold arrangement would remain the same, comprising a main collector with a pressure sensor and at least two sub-collectors. As stated above each section of a V-type engine may be provided with two or more CPS groups per bank, each bank having its own sub-collector. Also, a separate pressure sensor can be arranged in each such sub-collector.

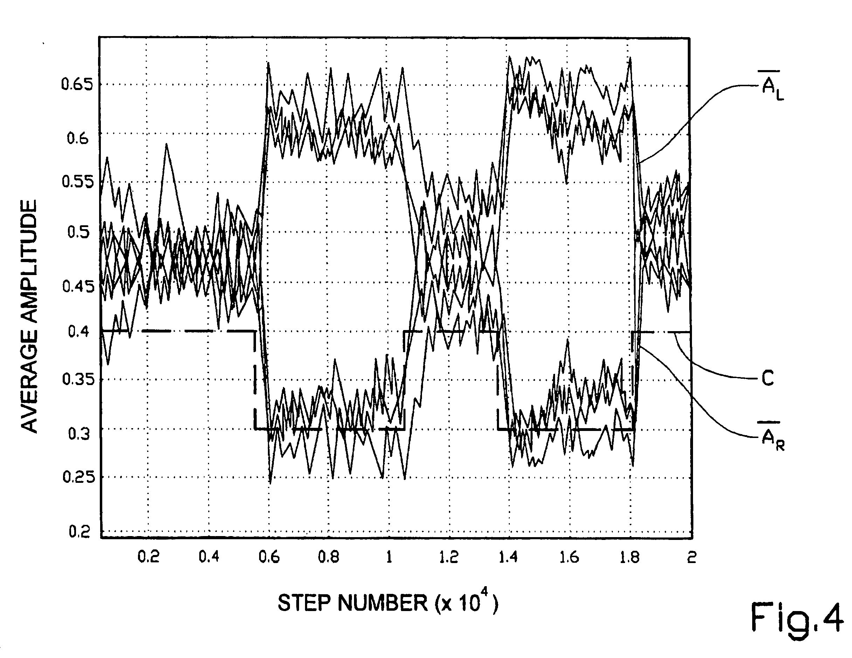

The average values of all six amplitudes over 25 cycles, as shown in this example, in the case of a failure of one bank are plotted in Figure 4. Figure 4 shows the average pressure amplitude over step number, where each step corresponds to 30° CA. As previously described with reference to Figure 2, the engine has been divided into a right bank $B_R$ and a left bank $B_L$, each having three cylinders. CPS target values are plotted with a (dashed) line C. For the CPS, the value 0.4 corresponds to a low lift $L_L$ and the value 0.3 corresponds to a high lift $L_H$ (see Fig. 1). A failure was simulated by disconnecting a cable that supplies electrical power to a solenoid of the right bank $B_R$. The second CPS group will then operate continuously on low lift, which is a default lift. In this case, the CPS failure group comprises all cylinders in the second CPS group. When the target value for the CPS is set to the value 0.3, the valves in the first CPS group are operated with a high lift and the valves in the second CPS group are operated with a low lift.

In this case sampling occurs over 25 cycles, but it is of course possible to select a different sampling period. The number of cycles must be selected high enough to allow sampling of a minimum number of intake events, while low enough to allow a reasonable response time from the control unit.

The solenoid is an electromagnetic actuator that is used to open oil channels for the CPS system. Pressurised oil from the oil channels causes pins in the camshaft mechanism to move and shift the cam profile.

Step 2. The maximum and minimum values of the average amplitudes are calculated for first and second CPS groups respectively.

The average amplitudes $\overline{A_i}$ in the case of a failure of one CPS group, in this case the second CPS group, are plotted in Figure 4. Curves for cylinders 1, 3 and 5 for the first CPS group are indicated by (solid) lines $\overline{A_L}$ and curves 2, 4 and 6 for the second CPS group are indicated by (solid) lines $\overline{A_R}$. Figure 4 clearly shows a marked difference between the (solid) lines $\overline{A_L}$ belonging to the first CPS group and the (solid) lines $\overline{A_R}$ belonging to the second CPS group in the case of a failure of the cam profile switching for the second CPS group.

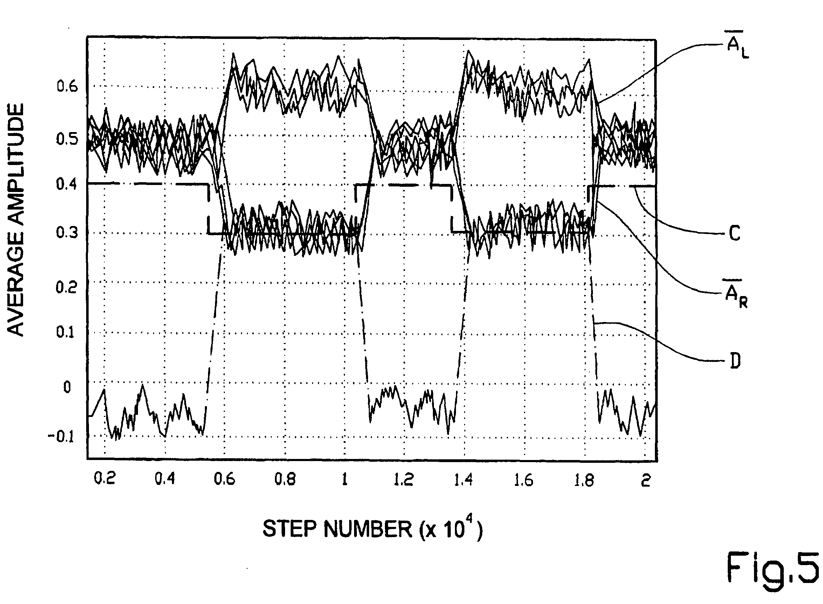

Minimum values of the signals that are plotted with (solid) lines for the first CPS group are computed, and simultaneously maximum values are computed for the signals plotted with (solid) lines that correspond to the second CPS group. The signal that represents the difference between minimum values and maximum values respectively is plotted with a (dashed) line D in Figure 5. The pressure pulse signals from Figure 4 have also been plotted in Figure 5.

Using the information plotted in Figure 5 it can be determined that the second CPS group is operated with the wrong lift if the difference signal D (see the dashed line) exceeds a predetermined reference value. By comparing the difference value of said signal to the reference value it can be diagnosed that the second CPS group has a malfunction if the difference between the values is outside a predetermined boundary. Notice that, the boundaries are different for different banks. This method allows the number of parameters to be calibrated to be significantly reduced. Instead of comparing the amplitudes of all six cylinders to their respective reference values the proposed algorithm has only one calibrated parameter.

Step 3. The decision for diagnosing a fault for the cam lift for the second CPS group is made by taking the difference between minimum value of the average amplitude for the first CPS group and maximum value of the average amplitude for the second CPS group and comparing it with the reference value. This reference value is a function of the engine speed and load. The same logic is applicable for the other bank, further banks or individual cylinders, as the case may be.

In order for the pressure amplitudes to be distinguishable, a minimum of four points are required for each intake event. The function is preferably sampled crank angle (CA) synchronised, with a step s in CA degrees which is calculated as follows:

$$(3) \qquad s = \frac{L_C}{n_P N}$$

where;

N     is the number of cylinders in the engine,
$n_P$    is the number of points measured for each intake event ($n_P \geq 4$).
$L_C$    is the length of the engine cycle in CA degrees (as a rule, $L_C$ = 720°).

For a six cylinder engine the discretisation step is 30° which corresponds to four measured points per cylinder over a conventional 720° engine cycle. Since an engine crankshaft is usually provided with 60 teeth, the step s should be a multiple of 6°. The reference value, which is a function of load and speed, is computed with the time based discretisation step, in order to reduce the computational load on the electronic control unit.

It should be noted that the failure detection method described above is directly applicable for the single cylinder failure case, where one average amplitude only is deviated from the others. One possible criterion for the implementation of the individual cylinder detection algorithms, as opposed to individual banks, depends on the difference in exhaust emissions between operational and failed systems. Preliminary emission test results indicate that the failure of a single cylinder is not the most exhaust emission sensitive case for engines with two or more discrete banks of cylinders. The single cylinder case would therefore be applicable to engines with 3-5 cylinders arranged in-line.

Irregularities of the intake manifold pressure signal include information not only about the CPS state but also about the purge flow that changes the pressure pulsation picture in the intake manifold and about the state of the variable intake system (VIS). Hence, the method for evaluating the pressure pulse irregularities for the CPS diagnostics can also be applied for a separate diagnosis of the VIS state.

The purpose of the variable intake system is to gain engine torque by using resonance effects in the intake manifold which affect positively the cylinder filling dynamics. The information about the resonance effects in the intake manifold exists in the high frequency component of the pressure signal. In this invention we propose to associate the irregularities of the intake manifold pressure signal with the VIS state.

The method for VIS diagnosis can be described by the following steps.

<u>Step 1.</u> The average values of the amplitudes of the inlet pressure signal are computed over relatively large number of measurements *n*, i.e.

$$(4) \qquad \overline{A} = \frac{\sum_{j=1}^{n} A_i}{n}$$

where;

A    is the average amplitude of the intake manifold pressure fluctuations for the cylinder i over the number of cycles *n*, and
*n*    for *j* = 1, .... *n* is the cycle number, and further;

$$(5) \qquad A_i = \max p(t_f, t_s) - \min p(t_f, t_s)$$

where;

$A_i$    is the pressure (p) fluctuation over the time interval $[t_s - t_f]$,
$t_s$    is the start of the time interval, and
$t_f$    is the end time.

This fluctuation $A_i$ is again the measure of the intake stroke power over the interval involved. This fluctuation is different for different VIS state.

It should be noted that the pressure fluctuations in this method are not evaluated on the individual cylinder basis as proposed for the CPS diagnostics method described above. In the present method, the average value of the amplitudes of the intake manifold pressure signal is evaluated over a large number of cycles for all the cylinders. This detection method is based on the fact that the change of the VIS state changes simultaneously the average amplitudes for all the cylinders.

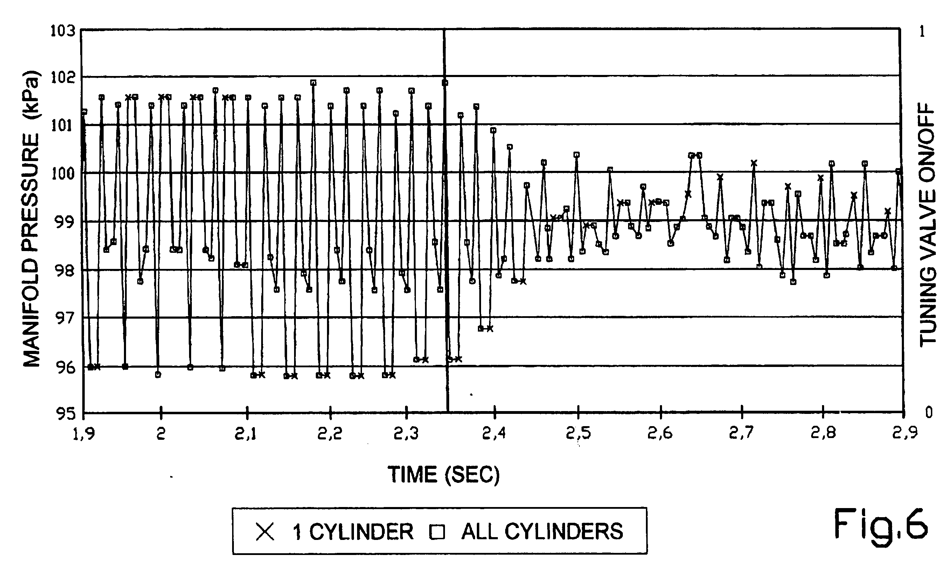

In Figure 6 the pressure pulses are plotted as a function of VIS state, or Intake Manifold Tuning Valve (IMTV) state. The diagram shows the intake manifold pressure sampled at every top dead center (TDC) for each cylinder. When an IMTV switch is performed, from a closed state where IMTV=0, to an open state where IMTV=1, the variation in manifold pressure is decreased. The measurements shown in Figure 6 were performed on a LANDROVER™ AP2.2 Cologne V6 engine. The diagram clearly shows the dependence of the pressure pulsation amplitudes on the VIS state, in that the variation of said pressure pulsation amplitudes decreases when the tuning valves are opened. The measurements are performed crank angle synchronised, with the step 120°. For clarity, the pressure amplitudes for a single cylinder is indicated with "x".

<u>Step 2.</u> The average value of the amplitudes from formula 4) computed in the previous step is compared to a reference value, which is a function of a engine speed and load. The decision for diagnosing a fault for the VIS state is made if the difference between the computed value and the reference value exceeds a predetermined threshold value.

It should be noted that for engines equipped by both CPS and VIS hardware the diagnostic algorithms proposed in this invention are still applicable. This is the case provided that the reference values for CPS diagnostic algorithms are calibrated by taking into account the VIS state, and that the reference values for VIS diagnostic algorithms are calibrated by taking into account the CPS state.

The invention is not limited to the embodiments described above and may be varied freely within the scope of the appended claims.

**Claims**

1.    Method for diagnosing an induction system for an internal combustion engine, which engine is a multicylinder engine with an air intake manifold (26, 27, 28), where at least one pressure sensor (11) is positioned in the air intake manifold (26, 27, 28), wherein
the method comprises the following steps:

- detecting a signal representing pressure pulses from a plurality of cylinders (1) in the air intake manifold (26, 27, 28) from each said pressure sensor (11),
- calculating average values for the amplitudes of the pressure signal over a predetermined number of cycles ($n_c$),

**characterized by**

- calculating maximum and minimum values of the average amplitudes for each of at least one group of successively firing cylinders,
- comparing the difference (D) between the calculated maximum and minimum values with a reference value and generating a difference signal, and
- generating a signal indicative of the state of the induction system from said difference signal.

2. Method according to claim 1 **characterized by** using the formula

$$\overline{A_i} = \frac{\sum_{j=1}^{n_c} A_{ij}}{n_c}$$

where;

$A_i$ is the average amplitude of the intake manifold pressure fluctuations for the cylinder i over the number of cycles, and
$n_c$ for $j = 1, .... n_c$ is the cycle number;

when calculating the average values for the amplitudes of the inlet pressure.

3. Method according to claim 2 **characterized by** calculating the value $A_{ij}$, that is a function of intake stroke power, using the formula

$$A_{ij} = \max p(t_f, t_s) - \min p(t_f, t_s)$$

where;

$A_i$ is the pressure ($p(\cdot)$) fluctuation over the time interval [$t_s$ - $t_f$],
$t_s$ is the start of the time interval, and
$t_f$ is the end time.

4. Method according to claim 1 **characterized by** generating a signal indicative of a malfunction in the induction system if the difference signal exceeds a predetermined limit.

5. Method according to claim 1 **characterized by** generating a signal indicative of a malfunction of a cam profile switching means controlling intake valve lift in the induction system.

6. Method according to claim 5 **characterized by** generating a signal indicative of a malfunction of the cam profile switching means for a group of successively firing cylinders, which group has a common cam profile switching actuator.

7. Method according to claim 5 **characterized by** generating a signal indicative of a malfunction of the cam profile switching means for individual cylinders, which cylinders have individual cam profile switching actuators.

8. Method according to claim 1 **characterized by** generating a signal indicative of a malfunction of a variable valve tuning means for each air intake manifold (26, 27, 28).

9. A computer readable storage device having stored therein data representing instructions executable by a computer to implement a diagnosis for an air induction system of an internal combustion engine, the engine having a piston disposed in a cylinder to define a combustion chamber, an air intake manifold (26, 27, 28), intake valves for admitting fresh air into the cylinder, a fuel injector for injecting fuel into the combustion chamber, and exhaust valves for discharging exhaust gas resulting from combustion within the cylinder, wherein the air induction system is provided with a cam profile switching means for the intake valves, the computer readable storage device comprising:

- instructions for actuating the cam profile switching means, as determined by an electronic control unit on the basis of current engine conditions;
- instructions for sampling a signal from a pressure sensor (11) located in the air intake manifold (26, 27, 28) over a predetermined number of cycles;
- instructions for calculating average values for the amplitudes of the pressure signal over a predetermined number of cycles,
**characterized by** further comprising
- instructions for calculating maximum and minimum values of the average amplitudes for each of at feast one group of successively firing cylinders,
- instructions for comparing the difference (D) between the calculated maxirtium and minimum values with a reference value and generating a difference signal, and
- instructions for generating a signal indicative of the state of the induction system from said difference signal.

**10.** A computer readable storage device according to claim 9, **characterized in** the computer readable storage device further comprising:

- instructions for generating a signal indicative of a malfunction of a cam profile switching means controlling intake valve lift in the induction system.

**11.** A computer readable storage device according to claim 10, **characterized in** the computer readable storage device further comprising:

- instructions for generating a signal indicative of a malfunction of the cam profile switching means for a group of successively firing cylinders, which group has a common cam profile switching actuator.

**12.** A computer readable storage device according to claim 10, **characterized in** the computer readable storage device further comprising:

- instructions for generating a signal indicative of a malfunction of the cam profile switching means for individual cylinders, which cylinders have individual cam profile switching actuators.

**13.** A computer readable storage device according to claim 9, **characterized in** the computer readable storage device further comprising:

- instructions for generating a signal indicative of a malfunction of a variable valve tuning means for each air intake manifold (26, 27, 28).

**Patentansprüche**

**1.** Verfahren zur Diagnose eines Ansaugsystems eines Verbrennungsmotors, welcher als Mehrzylindermotor mit einem Luftansaugrohr (26, 27, 28) ausgebildet ist, wobei mindestens ein Drucksensor (11) in dem Luftansaugrohr (26, 27, 28) vorgesehen ist, wobei das Verfahren die folgenden Schritte aufweist:

- Erfassen eines Signals von jedem der Drucksensoren (11), welches
- Druckimpulse von einer Mehrzahl von Zylindern (1) in dem Luftansaugrohr (26, 27, 28) darstellt,
- Berechnen von Durchschnittswerten der Amplituden des Drucksignals über eine vorbestimmte Anzahl von Takten ($n_c$),

**gekennzeichnet durch** die Schritte:

- Berechnen von Maximal- und Minimalwerten der durchschnittlichen Amplituden für jeden von mindestens einer Gruppe von aufeinanderfolgend zündenden Zylindern,

- Vergleichen der Differenz (D) zwischen den berechneten. Maximal-und Minimalwerten mit einem Referenzwert und Erzeugen eines Differenzsignals, und
- Erzeugen eines Signals, das den Status des Ansaugsystems anzeigt, aus dem Differenzsignal.

**2.** Verfahren nach Anspruch 1, **gekennzeichnet durch** das Verwenden der Formel

$$\overline{A_i} = \frac{\sum_{j=1}^{nc} A_{ij}}{n_c}$$

wobei:

$A_i$ die durchschnittliche Amplitude der Ansaugrohrdruckfluktuationen des Zylinders i über die Anzahl von Takten ist, und
$n_c$ die Taktanzahl für $j = 1, ..., n_c$ ist,

beim Berechnen der durchschnittlichen Werte der Amplituden des Ansaugdrucks.

**3.** Verfahren nach Anspruch 2, **gekennzeichnet durch** das Berechnen des Wertes Aij, welcher eine Funktion der Einlasshubleistung ist, unter Verwendung der Formel

$$A_{ij} = \max p(t_f, t_s) - \min p(t_f, t_s),$$

wobei

$A_i$ die Fluktuation des Drucks (p(•)) über das Zeitintervall $[t_s - t_f]$ ist,
$t_s$ der Beginn des Zeitintervalls ist, und
$t_f$ der Endzeitpunkt ist.

**4.** Verfahren nach Anspruch 1, **gekennzeichnet durch** das Erzeugen eines Signals, welches eine Fehlfunktion im Ansaugsystem anzeigt, falls das Differenzsignal einen vorbestimmten Grenzwert überschreitet.

**5.** Verfahren nach Anspruch 1, **gekennzeichnet durch** das Erzeugen eines Signals, welches eine Fehlfunktion eines Nockenprofilumschaltmittels, welches den Ansaugventilhub im Ansaugsystem steuert, anzeigt.

**6.** Verfahren nach Anspruch 5, **gekennzeichnet durch** das Erzeugen eines Signals, welches eine Fehlfunktion eines Nockenprofilumschaltmittels, für eine Gruppe von aufeinander folgend zündenden Zylindern, anzeigt, wobei diese Gruppe einen gemeinsamen Aktuator zur Nockenprofilumschaltung aufweist.

**7.** Verfahren nach Anspruch 5, **gekennzeichnet durch** das Erzeugen eines Signals, welches eine Fehlfunktion des Nockenprofilumschaltmittels für einzelne Zylinder anzeigt, wobei diese Zylinder separate Aktuatoren zur Nockenprofilumschaltung aufweisen.

**8.** Verfahren nach Anspruch 1, **gekennzeichnet durch** das Erzeugen eines Signals, welches eine Fehlfunktion eines variablen Ventilsteuermittels für jedes Luftansaugrohr (26, 27, 28) anzeigt.

**9.** Computerlesbare Speichervorrichtung, in welcher Daten gespeichert sind, die Befehle darstellen, die von einem Computer ausgeführt werden können, um eine Diagnose für ein Luftansaugsystem eines Verbrennungsmotors zu implementieren, wobei der Motor einen in einem Zylinder angeordneten Kolben, um eine Brennkammer zu definieren, ein Luftansaugrohr (26, 27, 28), Ansaugventile-zum Zuführen von frischer Luft in den Zylinder, und eine Einspritzdüse zum Einspritzen von Kraftstoff in die Brennkammer und Auslaßventile zum Auslassen von Abgasen aufweist, die durch der Verbrennung im Zylinder entstehen, wobei das Luftansaugsystem mit einem Nockenprofilumschaltmittel für die Ansaugventile versehen ist, wobei die computerlesbare Speichervorrichtung Folgendes enthält:

- Befehle zum Betreiben des Nockenprofilmittels, und zwar nach Maßgabe einer elektronischen Steuereinheit auf Basis des gegenwärtigen Motorzustands;
- Befehle zum Abtasten eines Signals von einem Drucksensor (11), welcher sich im Luftansaugrohr (26, 27, 28) befindet, über eine vorbestimmte Anzahl von Takten;
- Befehle zum Berechnen von Durchschnittswerten der Amplituden des Drucksignals über eine vorbestimmte Anzahl von Takten,

**dadurch gekennzeichnet, dass** die computerlesbare Speichervorrichtung ferner Folgendes aufweist:

- Befehle zum Berechnen von Maximal- und Minimalwerten der durchschnittlichen Amplituden für jeden von mindestens einer Gruppe von aufeinanderfolgend zündenen Zylindern,
- Befehle zum Vergleichen der Differenz (D) zwischen den berechneten Maximal- und Minimalwerten mit einem Referenzwert und Erzeugen eines Differenzsignals, und
- Befehle zum Erzeugen eines Signals, welches den Status des Ansaugsystems anzeigt, aus dem Differenzsignal.

10. Computerlesbare Speichervorrichtung nach Anspruch 9, **dadurch gekennzeichnet, dass** die computerlesbare Speichervorrichtung ferner Folgendes enthält:

- Befehle zum Erzeugen eines Signals, welches eine Fehlfunktion eines Nockenprofilumschaltmittels, welches den Ansaugventilhub steuert, anzeigt.

11. Computerlesbare Speichervorrichtung nach Anspruch 10, **dadurch gekennzeichnet, dass** die computerlesbare Speichervorrichtung ferner Folgendes enthält:

- Befehle zum Erzeugen eines Signals, welches eine Fehlfunktion eines Nockenprofilumschaltmittels, für eine Gruppe von aufeinander folgend zündenden Zylindern, anzeigt, wobei diese Gruppe einen gemeinsamen Aktuator zur Nockenprofilumschaltung aufweist.

12. Computerlesbare Speichervorrichtung nach Anspruch 10, **dadurch gekennzeichnet, dass** die computerlesbare Speichervorrichtung ferner Folgendes enthält:

- Befehle zum Erzeugen eines Signals, welches eine Fehlfunktion des Nockenprofilumschaltmittels für einzelne Zylinder anzeigt, wobei diese Zylinder separate Aktuatoren zur Nockenprofilumschaltung aufweisen.

13. Computerlesbare Speichervorrichtung nach Anspruch 9, **dadurch gekennzeichnet, dass** die computerlesbare Speichervorrichtung ferner Folgendes enthält:

- Befehle zum Erzeugen eines Signals, welches eine Fehlfunktion eines variablen Ventilsteuermittels für jedes Luftansaugrohr (26, 27, 28) anzeigt.

**Revendications**

1. Procédé pour diagnostiquer un système d'admission pour un moteur à combustion interne, lequel moteur est un moteur multicylindre ayant une tubulure d'admission d'air (26, 27, 28), où au moins un capteur de pression (11) est positionné dans la tubulure d'admission d'air (26, 27, 28), dans lequel le procédé comporte les étapes suivantes :

- détecter un signal représentant des impulsions de pression provenant d'une pluralité de cylindres (1) dans la tubulure d'admission d'air (26, 27, 28) à partir de chaque dit capteur de pression (11),
- calculer des valeurs moyennes pour les amplitudes du signal de pression sur un nombre de cycles prédéterminé ($n_c$),

**caractérisé par** les étapes consistant à :

- calculer des valeurs maximale et minimale des amplitudes moyennes pour chacun d'au moins un groupe de cylindres allumés de manière successive,
- comparer la différence (D) entre les valeurs maximale et minimale calculées avec une valeur de référence et produire un signal de différence, et

- produire un signal indicatif de l'état du système d'admission à partir dudit signal de différence.

2. Procédé selon la revendication 1 **caractérisé par** l'utilisation de la formule $\overline{A_i} = \dfrac{\sum\limits_{j=1}^{n_c} A_{ij}}{n_c}$ où

$\overline{A_i}$ est l'amplitude moyenne des fluctuations de pression de tubulure d'admission pour le cylindre i sur le nombre de cycles, et

$n_c$ pour j = 1 à $n_c$ est le nombre de cycles,

lors du calcul des valeurs moyennes pour les amplitudes de la pression d'admission.

3. Procédé selon la revendication 2 **caractérisé par** le calcul de la valeur $A_{ij}$, qui est une fonction de la puissance de course d'admission, en utilisant la formule $A_{ij} = \max p(t_f, t_s) - \min p(t_f, t_s)$ où :

$A_i$ est la fluctuation de pression ($p(\bullet)$) sur l'intervalle de temps [$t_s$- $t_f$],

$t_s$ est le début de l'intervalle de temps, et

$t_f$ est le temps de fin.

4. Procédé selon la revendication 1 **caractérisé par** la production d'un signal indicatif d'un dysfonctionnement dans le système d'admission si le signal de différence dépasse une limite prédéterminée.

5. Procédé selon la revendication 1 **caractérisé par** la production d'un signal indicatif d'un dysfonctionnement de moyens de basculement de profil de came commandant une levée de soupapes d'admission dans le système d'admission.

6. Procédé selon la revendication 5 **caractérisé par** la production d'un signal indicatif d'un dysfonctionnement des moyens de basculement de profil de came pour un groupe de cylindres allumés de manière successive, lequel groupe a un actionneur commun de basculement de profil de came.

7. Procédé selon la revendication 5 **caractérisé par** la production d'un signal indicatif d'un dysfonctionnement des moyens de basculement de profil de came pour des cylindres individuels, lesquels cylindres ont des actionneurs individuels de basculement de profil de came.

8. Procédé selon la revendication 1 **caractérisé par** la production d'un signal indicatif d'un dysfonctionnement de moyens de réglage variable des soupapes pour chaque tubulure d'admission d'air (26, 27, 28).

9. Dispositif de mémorisation lisible par un ordinateur ayant mémorisé dans celui-ci des données représentant des instructions exécutables par un ordinateur pour mettre en oeuvre un diagnostic pour un système d'admission d'air d'un moteur à combustion interne, le moteur ayant un piston disposé dans un cylindre pour définir une chambre de combustion, une tubulure d'admission d'air (26, 27, 28), des soupapes d'admission pour admettre de l'air frais dans le cylindre, un injecteur de carburant pour injecter du carburant dans la chambre de combustion, et des soupapes d'échappement pour évacuer un gaz d'échappement résultant d'une combustion dans le cylindre, dans lequel le système d'admission d'air est muni de moyens de basculement de profil de came pour les soupapes d'admission, le dispositif de mémorisation lisible par un ordinateur comportant :

- des instructions pour actionner les moyens de basculement de profil de came, tel que déterminé par une unité de commande électronique sur la base des conditions de moteur actuelles,

- des instructions pour échantillonner un signal provenant d'un capteur de pression (11) placé dans la tubulure d'admission d'air (26, 27, 28) sur un nombre de cycles prédéterminé,

- des instructions pour calculer des valeurs moyennes pour les amplitudes du signal de pression sur un nombre de cycles prédéterminé,

**caractérisé en ce qu'**il comporte également :

- des instructions pour calculer des valeurs maximale et minimale des amplitudes moyennes pour chacun d'au moins un groupe de cylindres allumés de manière successive,

- des instructions pour comparer la différence (D) entre les valeurs maximale et minimale calculées avec une valeur de référence et pour produire un signal différence, et

- des instructions pour produire un signal indicatif de l'état du système d'admission à partir dudit signal de différence.

**10.** Dispositif de mémorisation lisible par un ordinateur selon la revendication 9, **caractérisé en ce que** le dispositif de mémorisation lisible par un ordinateur comporte de plus :

- des instructions pour produire un signal indicatif d'un dysfonctionnement de moyens de basculement de profil de came commandant une levée de soupapes d'admission dans le système d'admission:

**11.** Dispositif de mémorisation lisible par un ordinateur selon la revendication 10, **caractérisé en ce que** le dispositif de mémorisation lisible par un ordinateur comporte en outre :

- des instructions pour produire un signal indicatif d'un dysfonctionnement des moyens de basculement de profil de came pour un groupe de cylindres allumés de manière successive, lequel le groupe a un actionneur commun de basculement de profil de came.

**12.** Dispositif de mémorisation lisible par un ordinateur selon la revendication 10, **caractérisé en ce que** le dispositif de mémorisation lisible par un ordinateur comporte également :

- des instructions pour produire un signal indicatif d'un dysfonctionnement des moyens de basculement de profil de came pour des cylindres individuels, lesquels cylindres ont des actionneurs individuels de basculement de profil de came.

**13.** Dispositif de mémorisation lisible par un ordinateur selon la revendication 9, **caractérisé en ce que** le dispositif de mémorisation lisible par un ordinateur comporte de plus :

- des instructions pour produire un signal indicatif d'un dysfonctionnement de moyens de réglage variable des soupapes pour chaque tubulure d'admission d'air (26, 27, 28).

**Fig.1**

Fig.2

Fig.3

EP 1 460 254 B1

Fig.4

EP 1 460 254 B1

Fig.5

EP 1 460 254 B1

Fig.6

X 1 CYLINDER  □ ALL CYLINDERS

EP 1 460 254 B1